# EUROPÄISCHE PATENTANMELDUNG

(11) **EP 1 923 201 A1**
(43) Veröffentlichungstag der Anmeldung: **21.05.2008**
(21) Anmeldenummer: 06024020.7
(22) Anmeldetag: 20.11.2006
(51) Int. Cl.: B29C 65/08

(54) **Ultraschallschweissvorrichtung**

(71) Anmelder: Jentschmann AG Zürich, CH-8902 Urdorf (CH)
(72) Erfinder: Die Erfindernennung liegt noch nicht vor
(74) Vertreter: Gachnang, Hans Rudolf

(57) **Zusammenfassung**

Eine Vorrichtung (1) zum Ultraschallschweißen von dünnem schichtförmigem Material umfasst eine Sonotrode (2) und einen an die Sonotrode (2) anpressbaren Amboss (10), welcher eine Mehrzahl von Ambosselementen, beispielsweise in der Form von Ambossrollen (11-13), umfasst, die entlang eines Umfangsabschnitts der Sonotrode (2) angeordnet sind und jeweils eingerichtet sind, um das zwischen der Sonotrode (2) und dem Amboss (10) hindurchzuführenden Material abzustützen.

## Beschreibung

Die vorliegende Erfindung betrifft eine Vorrichtung zum Ultraschallschweißen von dünnem schichtförmigem Material gemäß dem Oberbegriff des Patentanspruchs 1, wie sie beispielsweise zur Bildung von Schweißnähten an Textilien oder anderen Materialien Verwendung findet.

Das Verschweißen von zwei Werkstücken entlang deren Kanten mittels Ultraschall ist bekannt. Beim Verschweißen von Zuschnitten für Textilien, z.B. für wasserdichte Bekleidungstextilien, ist es bekannt, die beiden zu verschweißenden Kanten sich überlappend zwischen einer Sonotrode und einem der Sonotrode gegenüberliegenden Amboss hindurch zu führen. Der Amboss kann insbesondere in der Form einer Scheibe ausgebildet sein, welche an der Sonotrode anliegt, da bei einer derartigen Konfiguration auch ohne Weiteres bogenförmige Nähte erzeugt werden können.

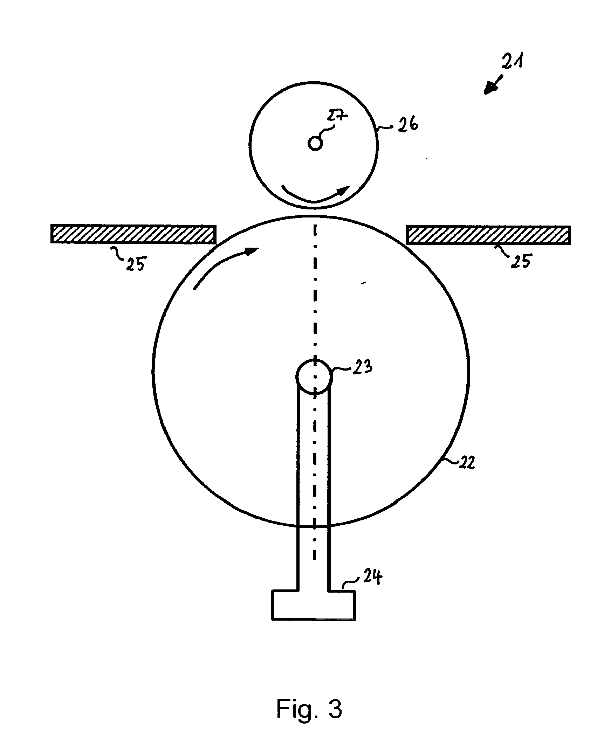

Figur 3 zeigt beispielhaft eine derartige herkömmliche Ultraschallschweißvorrichtung 21 mit einer rollen- oder scheibenförmigen Sonotrode 22, welche von einem Ultraschallgenerator 24 angeregt wird, und mit einem rollen- oder scheibenförmigen Amboss 26. Ein auf einem Arbeitstisch 25 geführtes, in der Figur nicht dargestelltes Werkstück wird zwischen die Sonotrode 22 und den Amboss 26 eingeführt, wobei durch die dem Werkstück von der Sonotrode 22 zugeführte Energie das Werkstück verschweißt wird, beispielsweise zur Bildung einer Naht bei Textilien. Der Amboss 26 dient dabei zur Abstützung des Werkstücks während des Schweißvorgangs. Die Sonotrode 22 ist um eine Achse 23 und der Amboss 26 um eine Achse 27 drehbar gelagert.

Ein Nachteil der in Figur 3 gezeigten herkömmlichen Ultraschallschweißvorrichtung 21 besteht darin, dass das Werkstück nur in einem kleinen Kontaktbereich zwischen dem Amboss 26 und der Sonotrode 22 ausreichend nahe an diesen geführt wird, dass die Ultraschallschwingungen der Sonotrode 22 effektiv auf das Werkstück übertragen werden. Eine effektive Kontaktfläche für den Schweißvorgang ist folglich klein. Bei einer vorgegebenen Schweißleistung resultiert der kleine Kontaktbereich in einer lokal großen Materialbelastung, welche beispielsweise zu lokal hohen Temperaturen und/oder einem durch Druck hervorgerufenen Walkeffekt und somit zu einer Veränderung der Oberfläche des Materials führt. Zwar können diese Probleme prinzipiell durch eine Verringerung der von der Sonotrode an das Werkstück abgegebenen Leistung reduziert werden, doch muss dann die Vorschubgeschwindigkeit des zu verschweißenden Materials verringert werden, um eine Schweißnaht mit ausreichender Güte herzustellen. Folglich besteht das Problem, dass die erreichbare Schweißgeschwindigkeit klein ist.

Eine Aufgabe der vorliegenden Erfindung besteht darin, eine verbesserte Ultraschallschweißvorrichtung zur Verfügung zu stellen. Insbesondere besteht eine Aufgabe darin, eine gattungsgemäße Ultraschallschweißvorrichtung so weiterzubilden, dass ein vergrößerter effektiver Kontaktbereich zwischen dem Amboss und der Sonotrode realisiert wird. Insbesondere besteht die Aufgabe der vorliegenden Erfindung weiterhin darin, eine gattungsgemäße Ultraschallschweißvorrichtung so weiterzubilden, dass eine unbeabsichtigte Oberflächenveränderung des Materials während des Ultraschallschweißens verringert und/oder eine Arbeitsgeschwindigkeit der Ultraschallschweißvorrichtung erhöht werden kann.

Erfindungsgemäß wird diese Aufgabe gelöst durch eine Vorrichtung zum Ultraschallschweißen von dünnem schichtförmigem Material nach Patentanspruch 1. Die abhängigen Ansprüche definieren bevorzugte oder vorteilhafte Ausführungsbeispiele.

Eine erfindungsgemäße Vorrichtung zum Ultraschallschweißen von dünnem schichtförmigem Material umfasst eine Sonotrode und einen an die Sonotrode anpressbaren Amboss, welcher eine Mehrzahl von Ambosselementen umfasst, die entlang eines Umfangsabschnitts der Sonotrode angeordnet sind und jeweils eingerichtet sind, um das zwischen der Sonotrode und dem Amboss hindurchzuführende Material abzustützen. Insbesondere kann die Abstützung durch den Amboss so erfolgen, dass die Ambosselemente derart eingerichtet und angeordnet sind, dass das Material direkt an den Ambosselementen zur Anlage kommt. Durch die Mehrzahl von Ambosselementen wird der effektive Kontaktbereich zwischen dem Amboss und der Sonotrode vergrößert. Dadurch wird eine Oberflächenveränderung des Materials während des Ultraschallschweißens verringert, es kann mit einem geringeren Anprssdruck gearbeitet werden, und eine Vorschubgeschwindigkeit des Materials kann erhöht werden.

Bei einem bevorzugten Ausführungsbeispiel sind die Ambosselemente jeweils als eine Ambossrolle ausgebildet, wobei die Ambossrollen paarweise voneinander beabstandet sind und drehbar an einer Trägereinrichtung gelagert sind. Die Ambossrollen können dabei individuell oder gemeinsam drehend antreibbar sein, wobei eine Antriebsdrehzahl der Ambossrollen einstellbar ist. Weiter bevorzugt ist auch die Sonotrode drehbar gelagert und antreibbar, wobei auch eine Antriebsdrehzahl der Sonotrode einstellbar. Die Ambossrollen und die Sonotrode können von einer gemeinsamen oder von separaten Antriebseinrichtungen angetrieben werden. Vorteilhaft sind die Antriebsdrehzahl der Ambossrollen und die Antriebsdrehzahl der Sonotrode unabhängig voneinander einstellbar. Nach diesem Ausführungsbeispiel wird ein größerer effektiver Kontaktbereich zwischen Amboss und Sonotrode realisiert, während durch den Drehantrieb der Ambossrollen und der Sonotrode gleichzeitig das Material transportiert wird.

Weitere Merkmale und Vorteile der Erfindung werden aus der nachfolgenden Beschreibung eines bevorzugten Ausführungsbeispiels unter Bezugnahme auf die Figuren ersichtlich.
Figur 1 ist eine Perspektivansicht einer Vorrichtung zum Ultraschallschweißen von dünnem schichtförmigem Material nach einem Ausführungsbeispiel der Erfindung.
Figur 2 ist eine schematische Seitenansicht der Vorrichtung von Figur 1.
Figur 3 ist eine schematische Seitenansicht einer herkömmlichen Ultraschallschweißvorrichtung.

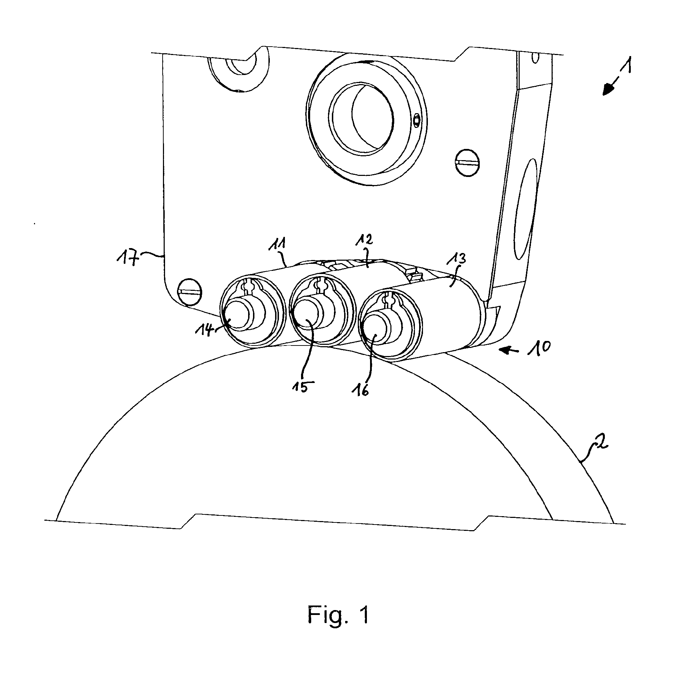

Figur 1 zeigt eine Perspektivansicht einer Vorrichtung 1 zum Ultraschallschweißen von dünnem schichtförmigem Material nach einem Ausführungsbeispiel der Erfindung. Die Vorrichtung 1 umfasst eine Sonotrode 2 und einen Amboss 10, welcher an die Sonotrode 2 anpressbar ist, so dass im Gebrauch das Material zwischen der Sonotrode und dem Amboss 10 hindurchgeführt wird und dabei an beiden unmittelbar, d.h. ohne einen dazwischen liegenden Riemen oder dergleichen, anliegt. Der Amboss 10 umfasst drei an einem Träger 17 drehbar gelagerte, als Ambossrollen 11-13 ausgebildete Ambosselemente. Die Ambossrollen sind durch einen nicht dargestellten Motor um Drehachsen 14-16 antreibbar, wobei insbesondere ein Motor zum Antreiben aller drei Ambossrollen 11-13 vorgesehen sein kann.

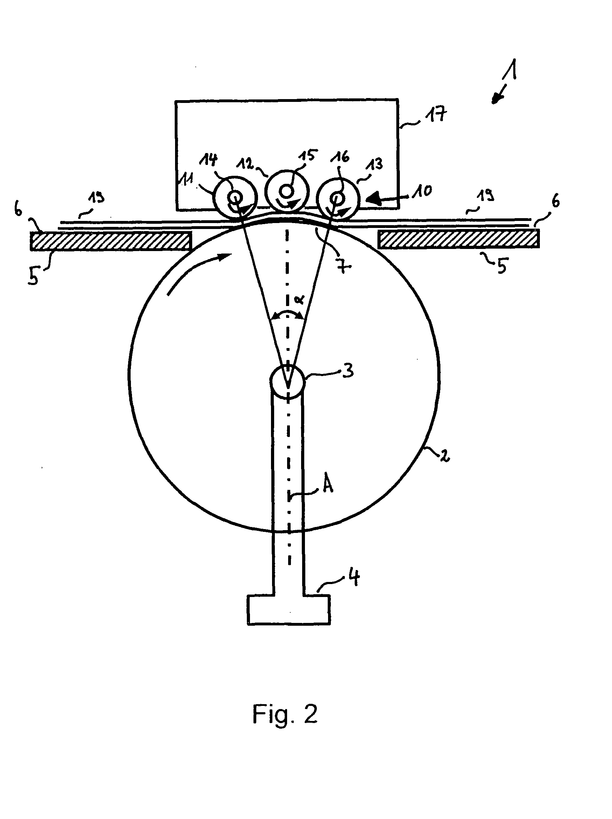

Wie am besten in der Seitenansicht von Figur 2 ersichtlich ist, ist auch die Sonotrode 2 rollen- oder scheibenförmig ausgebildet und drehbar um eine Achse 3 gelagert. Ein nur schematisch dargestellter Schallgenerator 4 zur Erzeugung von Ultraschallschwingungen ist zur Anregung der Sonotrode 2 mit dieser gekoppelt. Die Sonotrode 2 ist mit einem nicht gezeigten Motor um die Achse 3 drehend antreibbar.

Die Sonotrode 2 ist teilweise unterhalb einer Arbeitsfläche 6 eines Arbeitstisches 5 angeordnet, wobei ein Abschnitt der Sonotrode 2 über die Arbeitsfläche 6 nach oben hervorragt. Die drei Ambossrollen 11-13 sind oberhalb des Scheitelpunkts der Sonotrode 2 bzw. oberhalb zweier symmetrisch zum Scheitelpunkt der Sonotrode 2 liegender Positionen des Umfangs der Sonotrode 2 angeordnet. Eine die Größe des effektiven Kontaktbereichs 7 zwischen Amboss 10 und Sonotrode 2 charakterisierende Größe ist der Winkel α zwischen einem Umfangspunkt der Sonotrode 2, welcher einen kürzesten Abstand zum Umfang der Ambossrolle 11 aufweist, und einem Umfangspunkt der Sonotrode 2, welcher einen kürzesten Abstand zum Umfang der Ambossrolle 13 aufweist. Für die rollen- oder scheibenförmige Konfigurationen der Sonotrode 2 und der Ambossrollen 11-13 ist der Winkel α gleich dem Winkel zwischen den Verbindungslinien zwischen der Achse 3 der Sonotrode 2 und der Achse 14 der Ambossrolle 11 bzw. der Achse 16 der Ambossrolle 13. Bei einer vorteilhaften Ausgestaltung liegt der Winkel α im Intervall von ungefähr 20° bis ungefähr 40°.

Der Träger 17 ist bevorzugt so an einer nicht gezeigten Rahmenstruktur angeordnet, dass er in vertikaler Richtung relativ zu der Sonotrode 2 verstellbar ist, um einen vertikalen Abstand d zwischen den Ambossrollen 11-13 und der Sonotrode 2 einzustellen.

Wie bereits oben erläutert, sind sowohl die Ambossrollen 11-13 als auch die Sonotrode 2 drehend antreibbar, wobei eine in Figur 2 mit einem Pfeil dargestellte Drehrichtung der Sonotrode 2 gegensinnig zu ebenfalls mit Pfeilen dargestellten Drehrichtungen der Ambossrollen 11-13 ist. Während zum Antrieb der Sonotrode 2 und zum Antrieb der Ambossrollen 11-13 ein einziger Motor vorgesehen sein kann, ist bevorzugt ein Motor zum Antrieb der Sonotrode 2 und ein weiterer Motor zum Antrieb der Ambossrollen 11-13 vorgesehen. Bei einem Ausführungsbeispiel werden eine Antriebsdrehzahl f_{A} der Ambossrollen und eine Antriebsdrehzahl f_{S} der Sonotrode 2 derart eingestellt, dass die Umfangsgeschwindigkeiten der Ambossrollen 11-13 und der Sonotrode 2 näherungsweise gleich sind, d.h. f_{A} × r_{A} ≈ f_{S} × r_{S}, wobei r_{A} bzw. r_{S} den Radius der Ambossrolle bzw. der Sonotrode bezeichnen. Bei einem anderen Ausführungsbeispiel wird weiterhin der vertikale Abstand d zwischen den Ambossrollen 11-13 und der Sonotrode 2 berücksichtigt, und f_{A} und f_{S} werden so eingestellt, dass f_{A} × r_{A} ≈ f_{S} × (r_{S}+d), um einen Ausgleich der pro Zeiteinheit transportierten Längen der beiden Oberflächenlagen eines Werkstücks 19, das zwischen der Sonotrode 2 und den Ambossrollen 11-13 hindurchgeführt wird, zu erreichen.

In einer besonders vorteilhaften Ausgestaltung sind die Sonotrode 2 und die drei Ambossrollen 11-13 an einem gemeinsamen, hier nicht dargestellten Rahmen angeordnet, der um eine vertikale Achse A schwenkbar ist. Dies ermöglicht es, mit der Vorrichtung 1 eine vorgegebene, auch bogenförmige Kontur einer Naht auf dem Werkstück 19 nachzufahren. Selbstverständlich kann auch das Werkstück 19 entsprechend geführt werden, wenn die Sonotrode 2 und die Ambossrollen 11-13 nicht verschwenkbar sind.

Nachfolgend wird die Funktionsweise der Vorrichtung näher erläutert.

Das schematisch durch zwei parallele Linien angedeutete Werkstück 19, beispielsweise der Verbindungsbereich eines Ärmels und eines Brustteils einer Regenjacke, wird zwischen die Ambossrolle 11 und die Oberfläche 6 des Arbeitstisches 5 eingeführt und von der sich drehenden Ambossrolle 11 in Figur 2 nach rechts transportiert und gelangt so in Anlage mit der Sonotrode 2, wobei das Werkstück 19 während des Ultraschallschweißens an den Ambossrollen 11-13 anliegt und von diese abgestützt wird. Über den Wirkbereich α werden die beiden Lagen des Werkstücks 19 zwischen den Ambossrollen 11-13 und der Sonotrode 2 aneinander gepresst und durch die von der Sonotrode 2 abgestrahlten Schwingungen miteinander verschweißt. Durch die Drehung der Ambossrollen 11-13 und der Sonotrode 2 wird das Werkstück 19 weitertransportiert. Im Klemmbereich zwischen der Ambossrolle 13 und der Oberfläche 6 des Arbeitstisches 5 wird das Werkstück 19 durch nicht dargestellte Transportmittel oder von Hand weitertransportiert.

Mehrere Abwandlung des unter Bezugnahme auf Figuren 1 und 2 erläuterten Ausführungsbeispiels sind denkbar.

So kann beispielsweise die Oberfläche der Ambossrollen 11-13 eine Oberflächenkontur, beispielsweise in der Form umlaufender Vorsprünge oder Rillen aufweisen, falls dies für eine spezifische Anwendung der Vorrichtung 1 erforderlich ist. Weiterhin kann anstatt der bei dem oben erläuterten Ausführungsbeispiel verwendeten Rollenform für die Ambosselemente auch jede geeignete andere Form eingesetzt werden. Insbesondere können die Ambosselemente auch scheiben- oder kugelförmig ausgestaltet sein. Ähnlich ist auch die Form der Sonotrode nicht auf eine Scheiben- oder Rollenform beschränkt.

Während bei dem obigen Ausführungsbeispiel sowohl die Sonotrode 2 als auch alle Ambossrollen 11-13 drehend angetrieben werden, ist es auch möglich, dass eine oder mehrere der Ambossrollen 11-13 nicht angetrieben werden, oder dass die Sonotrode 2 nicht angetrieben wird. Insbesondere kann die Sonotrode 2 stationär feststehend ausgestaltet sein.

Weiterhin ist die Anzahl der Ambossrollen nicht auf drei beschränkt, sondern es kann jede geeignete Mehrzahl von Ambossrollen verwendet werden. So können beispielsweise auch zwei oder vier Ambossrollen vorgesehen sein.

Die Ambossrollen können als verhältnismäßig starre Körper ausgebildet und im Betrieb relativ zur Sonotrode 2 feststehend positioniert sein, können aber auch so angeordnet und/oder ausgestaltet sein, dass sie relativ zu der Sonotrode 2 elastisch nachgiebig sind. Dies kann beispielsweise dadurch erreicht werden, dass eine oder mehrere der Ambossrollen aus einem elastischen Material geformt ist und/oder dass die Ambossrollen 11-13 bezüglich der Sonotrode 2 federnd angeordnet und gegen die Sonotrode 2 vorgespannt sind.

Weiterhin kann die relative Orientierung von Sonotrode und Ambossrollen auf jede geeignete Weise gewählt werden. So kann beispielsweise die Sonotrode nicht nur wie in den Figuren dargestellt unterhalb, sondern auch oberhalb der Ambossrollen angeordnet sein.

Wie aus der obigen Beschreibung von Ausführungsbeispielen ersichtlich ist, wird erfindungsgemäß eine Vorrichtung zum Ultraschallschweißen bereitgestellt, bei welcher ein effektiver Kontaktbereich zwischen Amboss und Sonotrode durch das Vorsehen einer Mehrzahl von Ambosselementen im Vergleich zu einer herkömmlichen Vorrichtung vergrößert werden kann. Insbesondere kann dadurch bei dem in den Figuren gezeigten Ausführungsbeispiel eine Oberflächenveränderung durch lokale Materialbeanspruchung verringert und die Schweißgeschwindigkeit erhöht werden.

## Patentansprüche

1. Vorrichtung zum Ultraschallschweißen von dünnem schichtförmigem Material (19), umfassend eine Sonotrode (2) und einen an die Sonotrode (2) anpressbaren Amboss (10),
**dadurch gekennzeichnet,**
**dass** der Amboss (10) eine Mehrzahl von Ambosselementen (11-13) umfasst, welche entlang eines Umfangsabschnitts (7) der Sonotrode (2) angeordnet sind und jeweils eingerichtet sind, um das zwischen der Sonotrode (2) und dem Amboss (10) hindurchzuführende Material (19) abzustützen.

2. Vorrichtung nach Anspruch 1, **dadurch gekennzeichnet, dass** die Ambosselemente (11-13) angeordnet sind, um das Material (19) direkt anliegend abzustützen.

3. Vorrichtung nach Anspruch 1 oder 2, **dadurch gekennzeichnet, dass** Abschnitte der Ambosselemente (11-13), welche jeweils den kürzesten Abstand zu der Sonotrode (2) aufweisen, paarweise voneinander beabstandet sind.

4. Vorrichtung nach einem der vorhergehenden Ansprüche, **dadurch gekennzeichnet, dass** die Ambosselemente (11-13) paarweise voneinander beabstandet sind.

5. Vorrichtung nach einem der vorhergehenden Ansprüche, **dadurch gekennzeichnet, dass** die Ambosselemente (11-13) jeweils um eine Drehachse (14-16) drehbar an einer Trägereinrichtung (17) gelagert sind.

6. Vorrichtung nach Anspruch 5, **dadurch gekennzeichnet, dass** wenigstens eines der Ambosselemente (11-13) drehend antreibbar ist, wobei eine Antriebsdrehzahl des wenigstens einen der Ambosselemente (11-13) einstellbar ist.

7. Vorrichtung nach einem der vorhergehenden Ansprüche, **dadurch gekennzeichnet, dass** die Sonotrode (2) drehend antreibbar ist, wobei eine Antriebsdrehzahl der Sonotrode (2) einstellbar ist.

8. Vorrichtung nach einem der vorhergehenden Ansprüche, **dadurch gekennzeichnet, dass** ein Abstand zwischen der Sonotrode (2) und den Ambosselementen (11-13) einstellbar ist.

9. Vorrichtung nach einem der vorhergehenden Ansprüche, **dadurch gekennzeichnet, dass** die Sonotrode (2) und der Amboss (10) um eine gemeinsame vertikale Achse (A) schwenkbar gelagert sind.

10. Vorrichtung nach einem der vorhergehenden Ansprüche, **dadurch gekennzeichnet, dass** die Sonotrode (2) teilweise unterhalb einer Arbeitsfläche (6) eines Arbeitstisches (5) angeordnet ist, wobei ein Abschnitt (7) der Sonotrode (2) über die Arbeitsfläche (6) hervorragt und die Ambosselemente (11-13) entlang des hervorragenden Abschnitts angeordnet sind.

11. Vorrichtung nach einem der vorhergehenden Ansprüche, **dadurch gekennzeichnet, dass** der Umfangsabschnitt (7) der Sonotrode (2), entlang dessen die Ambosselemente (11-13) angeordnet sind, einen Winkelbereich von ungefähr 20° bis ungefähr 40° überdeckt.

12. Vorrichtung nach einem der vorhergehenden Ansprüche, **dadurch gekennzeichnet, dass** die Sonotrode (2) rollenförmig, scheibenförmig oder kugelförmig ausgebildet ist.

13. Vorrichtung nach einem der vorhergehenden Ansprüche, **dadurch gekennzeichnet, dass** die Ambosselemente (11-13) jeweils rollenförmig, scheibenförmig oder kugelförmig ausgebildet sind.
